# EUROPEAN PATENT APPLICATION

(11) **EP 0 590 237 A1**
(43) Date of publication of application: **06.04.1994**
(21) Application number: 93107343.1
(22) Date of filing: 06.05.1993
(51) Int. Cl.: B60N 2/44, B60R 22/26, B60N 2/02

(54) **Automotive seat having integrally mounted seat belt assembly**

(30) Priority: 05.08.1992 US 925524
(71) Applicant: DOUGLAS & LOMASON COMPANY, Farmington Hills, Michigan 48335-1671 (US)
(72) Inventor: Johnson, Richard F., Bloomfield Hills, Michigan 48304 (US); Holdampf, Carl J., Farmington Hills, Michigan 48331 (US); Wolf, Chad A., Novi, Michigan 48377 (US)
(74) Representative: Gahlert, Stefan, Dr.-Ing.

(57) **Abstract**

A seat assembly (10) is disclosed having a passenger restraint system (20) integrally incorporated therein. The seat assembly (10) is a "load-carrying" unit that is constructed to transfer the loading imparted on the passenger restraint system (20) to the vehicle's reinforced floor structure (18) during the occurrence of a "loaded" condition.

## Description

The present invention relates generally to automotive seating and, more particularly, to a modular seat assembly having a safety belt restraint system incorporated therein.

### BACKGROUND OF THE INVENTION

Virtually all motor vehicles are equipped with some type of passenger restraint system for physically restraining the seat occupant when the vehicle is subjected to high rates of deceleration which may occur, for example, during heavy braking or a collision (i.e., "loaded" conditions). The most common type of passenger restraint system is a safety belt system having a lap belt and a shoulder belt, or a combination thereof, that can be withdrawn from a retractor mechanism for latched engagement with an anchored buckle member. The retractor mechanism is operable to inhibit withdrawal of the safety belt upon the vehicle being subjected to deceleration forces exceeding a predetermined level, thereby restraining the vehicle occupant within the seat assembly.

In most safety belt systems, the retractor mechanism is anchored to a reinforced vertical pillar (i.e., the B-Pillar) of the motor vehicle while the lap belt and buckle member are typically anchored on opposite lateral sides of the seat assembly to a reinforced floor structure. Thus, such safety belt restraint systems have an anchorage arrangement wherein loading is directed to three distinct load points on the vehicle's structure. In other safety belt systems, it is known to anchor the buckle member for translational movement with the seat assembly during fore and aft positional adjustment. However, due to the increased loading imposed on the buckle member, the seat adjustment mechanism must be structurally reinforced to comply with the increased load carrying requirements. Moreover, such "travelling" buckle arrangements still require that the retractor mechanism be anchored to a vertical pillar of the motor vehicle. Thus, the need exists to develop a seat assembly incorporating an integrally mounted safety belt restraint system, wherein the seat assembly is a load-carrying unit that can be mounted directly to a reinforced floor structure of the motor vehicle.

### SUMMARY OF THE INVENTION

Accordingly, it is an object of the present invention to provide a significant improvement in seating systems for motor vehicle applications. More particularly, the present invention is directed to a seat assembly having a passenger restraint system integrally incorporated therein. The seat assembly is a "load-carrying" unit that is constructed to transfer the loading imparted on the passenger restraint system to the vehicle's reinforced floor structure during the occurrence of a "loaded" condition.

Another object of the present invention is to provide a seat assembly having three distinct load points associated with its integrated safety belt restraint system which maintain their spatial relationship with respect to each other during horizontal "fore and aft" adjustment of the seat assembly. Since the anchor points are associated with the seat assembly, the use of anchor points on vertical pillars is eliminated. Therefore, the seat assembly of the present invention provides unimpeded access to the rear passenger compartment in two-door vehicles, and permits use of safety belt restraint systems in vehicles designed without reinforced pillars.

As a related object, the present invention is directed to the integration of a passenger restraint system into a "modular" seat assembly which can be installed as a sub-assembly in the passenger compartment of the motor vehicle. Therefore, the modular seat assembly of the present invention is designed to significantly reduce the time and costs associated with installing a seating and restraint arrangement in a motor vehicle.

It is a further object of the present invention to provide a seat assembly having reinforcement means for inhibiting excessive pivotal excursions of the seat back relative to the seat member during loaded conditions. The reinforcement means is configured to accommodate loading imparted on the integrally mounted restraint system when used in conjunction with conventional seat assemblies.

According to the general principles of the present inventions, the modular seat assembly includes a base mechanism mounted directly to a reinforced floor structure of the motor vehicle, a seat member mounted to the base mechanism, and a seat back connected to the seat member. A safety belt restraint system is integrated into the seat assembly and includes a structural reinforcement member for reinforcing the interconnection between the seat member and seat back and a safety belt retractor mechanism mounted to the seat member. The safety belt can be withdrawn from the retractor mechanism to extend over the shoulder and chest of the seat occupant via a guide mechanism that is mounted to the reinforcement member. The opposite end of the safety belt is anchored to the base mechanism and/or the seat member. A buckle member is anchored in generally opposing relation to the anchor point for the safety belt to the base mechanism and/or the seat member. A latch plate coupled to the safety belt can be releasably fastened to the buckle member. In operation, the safety belt restraint system is adapted to restrain the seat occupant while loading on the seat assembly is transferred to the reinforced floor structure.

Other objects and advantages of the present invention will become apparent to those skilled in the art from the following detailed description of the preferred embodiments, when read in light of the accompanying drawings and the appended claims.

### BRIEF DESCRIPTION OF THE DRAWINGS

Figure 1 is a pictorial view of a seat assembly incorporating an integral passenger restraint system in accordance with the present invention;
Figure 2 is a pictorial view of the seat assembly, with its upholstery and cushioning removed, showing the structural components associated with the integral passenger restraint system;
Figure 3 is a side view of Figure 3;
Figure 4 is a sectional view of a cushion reinforcement member taken generally along line 4-4 of Figure 3;
Figure 5 is a sectional view of a seat back reinforcement member taken along line 5-5 of Figure 3;
Figure 6 is another sectional view of the seat back reinforcement member taken along line 6-6 of Figure 3;
Figure 7 is yet another sectional view of the seat back reinforcement member taken along line 7-7 of Figure 3;
Figure 8 is a pictorial view, similar to Figure 2, showing an alternative construction for the seat assembly of the present invention;
Figure 9 is a side view of Figure 8;
Figure 10 is a sectional view taken along line 10-10 of Figure 9; and
Figure 11 is a pictorial view of yet another alternative construction for the seat assembly of the present invention.

### DETAILED DESCRIPTION OF THE INVENTION

The present invention is directed to an improved seat assembly of the type adapted for use in motor vehicles. In general, a passenger restraint system is integrally incorporated into the improved seat assembly for overcoming many of the disadvantages associated with conventional automotive seating systems. The improved seat assembly is designed to be secured directly to a lower reinforced vehicle structure (i.e., the floor pan and/or the sill) of the motor vehicle. Therefore, any loading imparted on the passenger restraint system during a "loaded" condition (i.e., during heavy braking or a vehicular collision) is transferred from the seat assembly to the reinforced vehicle structure. More specifically, the improved seat assembly of the present invention includes a reinforced frame structure on which a three-point anchorage arrangement for the passenger restraint system is mounted. Thus, the reinforced seat assembly provides sufficient load carrying capacity for inhibiting excessive pivotal excursions of the anchorage points during "loaded" conditions. Finally, the improved seat assembly of the present invention can be completely pre-assembled as a "modular" unit for providing significant reductions in the time and costs associated with final installation of the integrated seating and restraint arrangement into the motor vehicle.

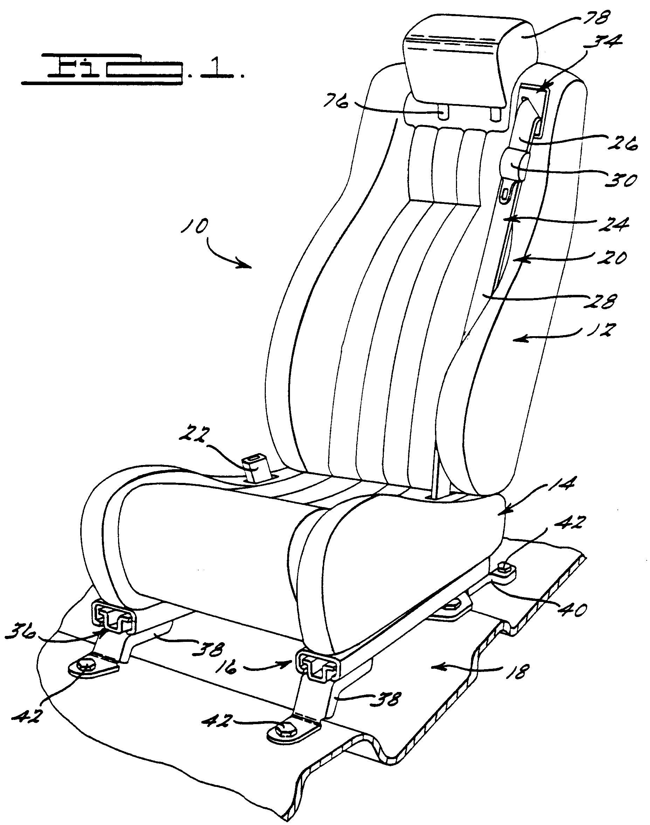

With particular reference to Figure 1, a seat assembly 10 is shown having an upholstered seat back 12 and seat member 14. Seat member 14 is shown mounted on an exemplary seat adjustment mechanism 16 of the type providing at least fore and aft (i.e., two-way) longitudinal sliding movement of seat assembly 10 with respect to the motor vehicle's reinforced lower structure 18. According to the present invention, a passenger restraint system 20 is integrally incorporated into seat assembly 10. In general, passenger restraint system 20 is a safety belt restraint system having its anchorage points located at reinforced portions of seat assembly 10. More particularly, safety belt restraint system 20 includes a buckle member 22 secured to an inboard frame portion of seat member 14, and/or seat adjustment mechanism 16, for longitudinal fore and aft movement therewith with respect to lower reinforced vehicle structure 18. Safety belt restraint system 20 further includes a retractable safety belt 24 having a combination shoulder belt 26 and lap belt 28, and a latch plate 30 that can be releasably fastened to buckle member 22 for restraining a vehicle occupant within seat assembly 10. As will be described hereinafter, a conventional safety belt retractor mechanism 32 is mounted to seat member 14 for inhibiting withdrawal of shoulder belt 26 therefrom upon the vehicle and/or safety belt 24 being subjected to deceleration levels exceeding a predefined value (i.e., during a "loaded" condition).

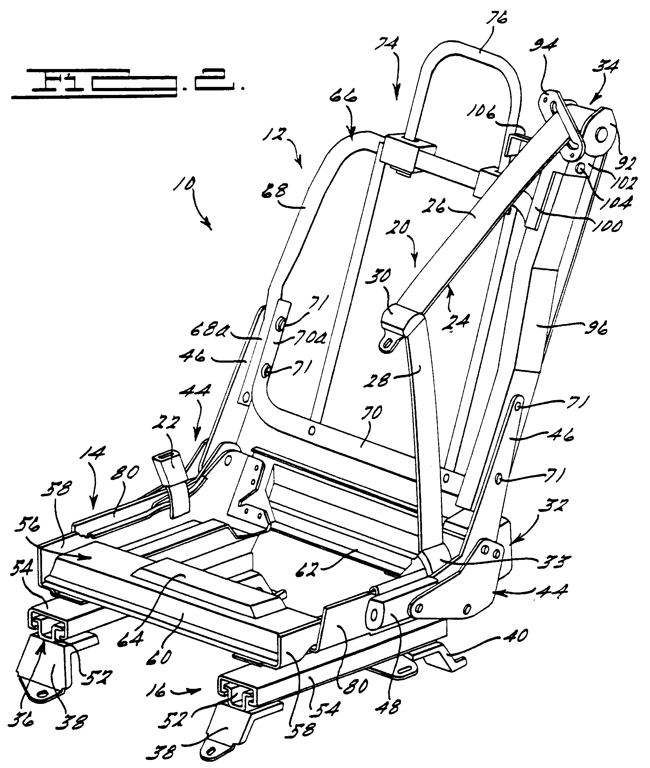

With reference to Figure 2, an anchor plate 33 is fixed to a terminal end of lap belt 28 and is secured to an outboard frame portion of seat member 14, and/or seat adjustment mechanism 16, while the opposite terminal end of shoulder belt 26 is wound on retractor mechanism 32 in a known manner. In addition, a guide mechanism 34 is provided for routing shoulder belt 26 over the occupant's shoulder. Seat adjustment mechanism 16 includes a floor-mounted base portion 36 having front and rear risers 38 and 40, respectively, that are secured to reinforced vehicle structure 18 via suitable fasteners, such as bolts 42. While exemplary in nature, the design and structure of seat adjustment mechanism 16 can be generally similar to that disclosed in U.S. Patent No. 4,979,716, commonly owned by the assignee of the present invention, the disclosure which is expressly incorporated by reference herein. However, as will be appreciated by those skilled in the art, seat adjustment mechanism 16 is intended to be merely exemplary of one type of adjustable seat system with which the integrated safety belt restraint system 20 of the present invention can be readily associated. While seat assembly 10 is shown as a driver's side unit, it will be appreciated that passenger restraint system 20 and its three-point anchorage arrangement, to be described hereinafter, are also readily adaptable for incorporation into a passenger-side seat assembly.

With continued reference to Figure 2, the frame constructions shown for seat member 14 and seat back 12 are generally conventional in nature for illustrating that integrated safety belt restraint system 20 is readily applicable for utilization with high-volume production seating systems. While specific embodiments of the frame constructions for seat back 12 and seat member 14 are hereinafter disclosed, it is to be understood that the present invention is directed to means for integrating safety belt restraint system 20 into automotive seat assemblies.

Seat assembly 10 is shown to include a recliner mechanism 44 which operably interconnects seat back 12 for pivotable movement relative to seat member 14. Again, virtually any conventional recliner mechanism of sufficient strength, either mechanically-actuated or remotely actuated, can be used with the integral passenger restraint system 20. For exemplary purposes, recliner mechanism 44 is shown as a remotely actuated unit having an elongated sector arm 46 coupled to seat back 12 and a motorized drive mechanism 48 secured to seat member 14. An output member (not shown) of drive mechanism 48 is coupled to sector arm 46 such that selective actuation of drive mechanism 48 results in pivotal movement of sector arm 46 and, in turn, seat back 12. While not always required, the particular construction shown includes a recliner mechanism 44 associated with each lateral side of seat assembly 10.

According to the embodiment shown, floor-mounted base portion 36 of seat adjustment mechanism 16 includes a pair of laterally-spaced lower tracks 52 and a pair of upper tracks or carriages 54. More particularly, lower tracks 52 are elongated structural members that are generally U-shaped in cross section, and which are each mounted to front and rear risers 38 and 40, respectively, for securing lower tracks 52 to reinforced vehicle structure 18. Carriages 54 are slidably mounted on lower tracks 52 for relative movement in the horizontal "fore and aft" directions upon selective actuation by the seat occupant of a horizontal adjustment mechanism (not shown). Carriages 54 are elongated and are generally rectangular in cross-section with an open channel formed along a lower edge thereof for enabling carriages 54 to be slidably positioned within lower tracks 52. Preferably, suitable bearing assemblies (not shown) are positioned between each carriage 54 and lower tracks 52 for minimizing frictional interference therebetween.

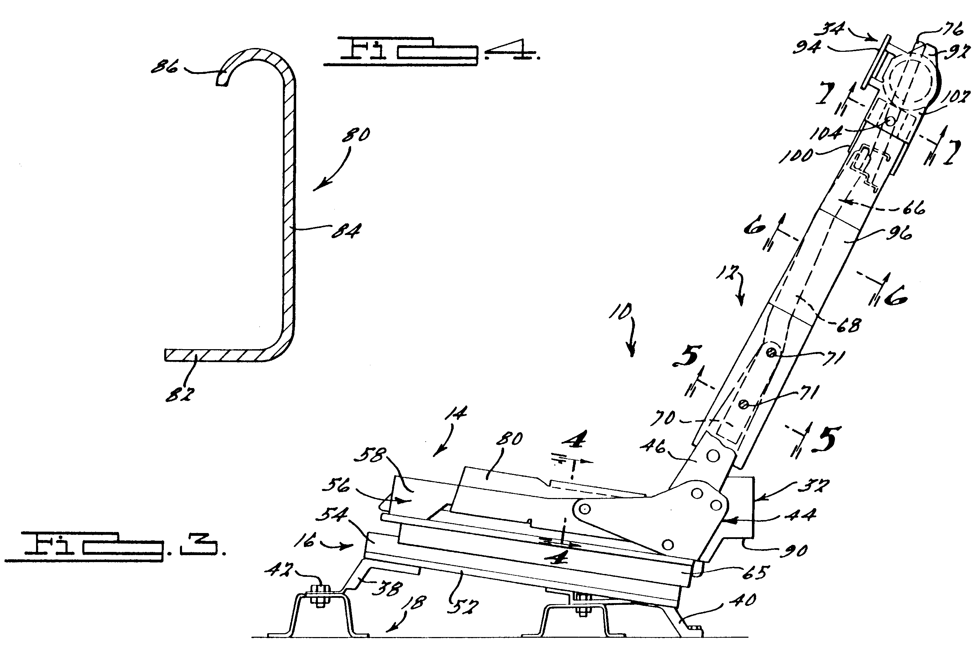

With reference to Figures 2 and 3, seat member 14 is shown to include a rigid box-like cushion pan 56 defined by a pair of laterally-spaced side rails 58 that are fixed to front and rear cross-rails 60 and 62, respectively. Front cross-rail 60 includes an outwardly deformed portion 64 provided for assisting in inhibiting the seat occupant from sliding out of seat member 14. As best seen in Figure 3, cushion pan 56 is fixedly secured to carriages 54 via a pair of elongated and laterally-spaced brackets 65 to produce the desired seat height and inclination relative to base portion 36 of seat adjustment mechanism 16. Preferably, brackets 65 are C-shaped members that are inserted over opposite lateral edges of carriages 54 and secured thereto by suitable means. Seat back 12 is also shown to have a rigid frame 66 that is constructed of tubular components. More particularly, seat back frame 66 includes an upper C-shaped tubular member 68 and a lower C-shaped tubular member 70. The terminal end portions 68a and 70a of C-shaped tubular members 68 and 70, respectively, are partially flattened and secured together in an overlapping manner to define the generally rectangular seat back frame 66. As seen, overlapping end portions 68a and 70a of seat back frame 66 are also secured to an upper portion of each sector arm 46 via recliner bolts 71. A head rest mechanism 74 is mounted to upper tubular member 68 and includes a generally U-shaped tubular member 76 on which an upholstered head rest 78 (Figure 1) is mounted for height adjustment relative to seat back 12.

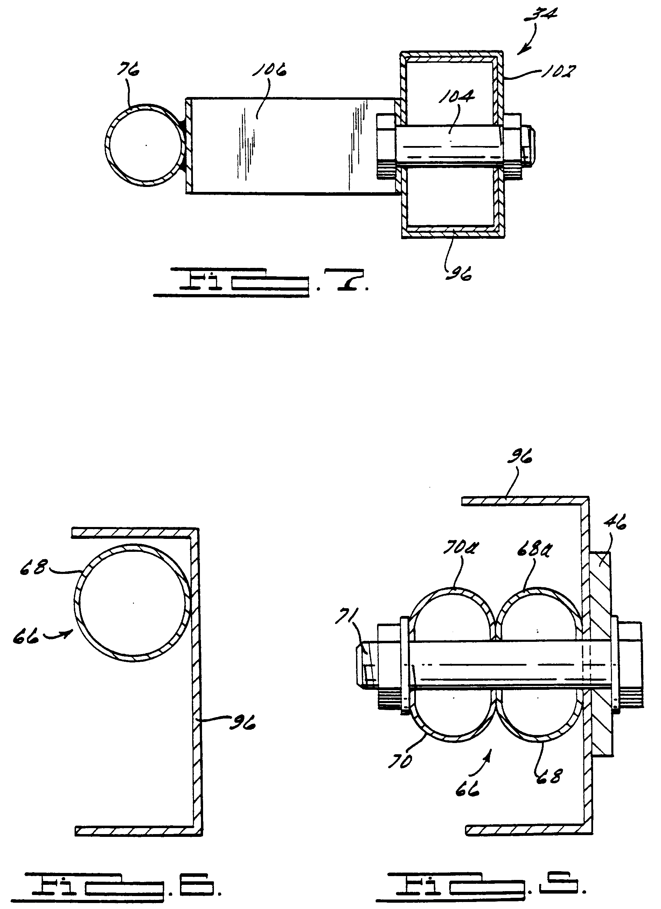

In accordance with the present invention, safety belt restraint system 20 is integrally incorporated into seat assembly 10. Since, seat assembly 10 is selectively adjustable via adjustment mechanism 16 in a generally horizontal plane, safety belt restraint system 20 "travels" with seat assembly 10. More specifically, restraint system 20 has a three-point anchorage arrangement for physically restraining the seat occupant within seat assembly 10 during "loaded" situations. In general, the three-point anchorage arrangement is associated with the structurally rigid components of cushion pan 56 and seat back frame 66 such that virtually all loading imparted on the three distinct anchor or "loading" points is routed through seat adjustment mechanism 16 and into reinforced vehicle structure 18. More specifically, a first anchor point is defined by buckle member 22 being secured to at least one of inboard side rail 58 and inboard carriage 54. To inhibit excessive buckling of cushion pan 56 under load, cushion reinforcement risers 80 are suitably mounted to side rails 58. As best seen from Figures 3 and 4, cushion reinforcement risers 80 extend along substantially the entire length of side rails 58 and can be secured to front and rear cross-rails 60 and 62, respectively, if required. More specifically, cushion reinforcement risers 80 are shown as having lower horizontal flanges 82 that are fixed (i.e., welded) to underside surfaces of side rails 58 and, preferably, to carriages 54. Cushion reinforcement risers 80 also include a vertical wall portion 84 positioned substantially contiguous to an outer vertical surface of side rail 58, and an upper curled-lip 86 that extends inwardly over a portion of side rail 58. Drive mechanisms 48 of recliners 44 are likewise secured to their respective side rails 58 and reinforcement risers 80 via recliner bolts 71. While cushion reinforcement risers 80 are shown as separate components for reinforcing a conventional cushion pan, it will be appreciated that such structural reinforcement can be integrally fabricated into side rails 58.

A second anchor point is defined by lap belt anchor plate 33 being secured to at least one of outboard side rail 58 and its respective carriage 54. Again, cushion reinforcement riser 80 is provided for structurally reinforcing the outboard portion of cushion pan 56. As such, the first and second anchor points are associated with seat member 14 for longitudinal travel therewith relative to lower stationary tracks 52 and reinforced vehicle structure 18. The third anchor point is located behind the seat occupant and is defined by the position at which retractor mechanism 32 is mounted to rear cross-rail 62 of cushion pan 56. To ensure that retractor mechanism 32 inhibits withdrawal of safety belt 24 upon heavy loading, retractor mechanism 32 is mounted to seat member 14 to maintain its orientation relative to reinforced vehicle structure 18 during operation of recliners 44. Preferably, safety belt retractor mechanism 32 is mounted to a rigid mounting bracket 90 which, in turn, is mounted to rear cross-rail 62 in close proximity to outboard side rail 58. As previously stated, retractor mechanism 32 is operable for permitting safety belt 24 to be selectively withdrawn and retracted therefrom during normal vehicle operating conditions while inhibiting withdrawal in response to the occurrence of a loaded condition.

Safety belt 24 is routed to extend from retractor device 32 over a guide member 92 and through a slotted guide bracket 94 associated with guide mechanism 34. While guide member 92 is shown as a roller, it is contemplated that any suitable stationary or slider-type device could be used. As will be described hereinafter, guide mechanism 34 is rigidly secured to a seat back reinforcement beam 96 for positioning the guide member, such as guide roller 92, at a desired orientation above the shoulder of a seat occupant. As such, guide roller 92 becomes a load point located above the occupant's shoulder about which seat back 14 attempts to pivot. Since the load point is above the shoulder of the seat occupant, reinforcement beam 96 acts to inhibit excessive pivotable excursions of seat back 12 about seat member 14. Thus, seat back reinforcement beam 96 is designed to increase the structural rigidity and load carrying capacity of seat back frame 66. Preferably, reinforcement beam 96 is an elongated open-channel member or box-beam which extends along the entire vertical length of the outboard portion of seat back frame 66. More preferably, reinforcement beam 96 is segmented to generally follow the vertical edge contour of seat back frame 66. While not shown, it will be understood that a second reinforcement member could be installed on the opposite lateral portion of seat back frame 66 for increasing the resistance to pivotable excursions of seat back 12 relative to seat member 14.

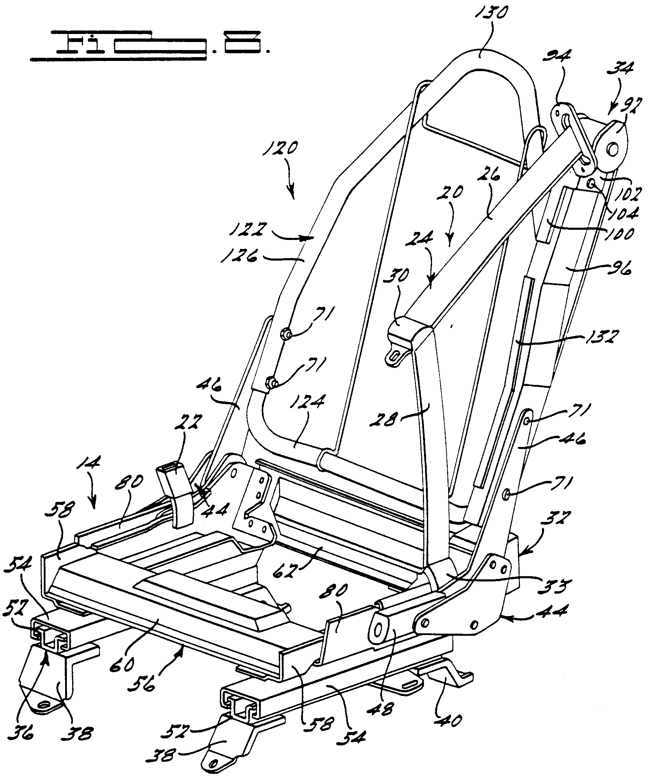

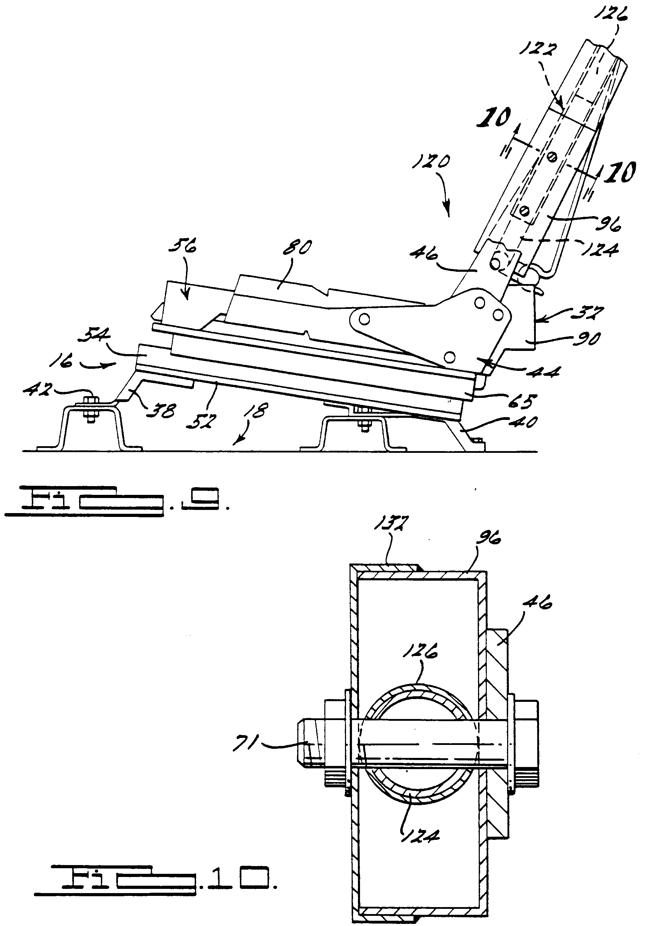

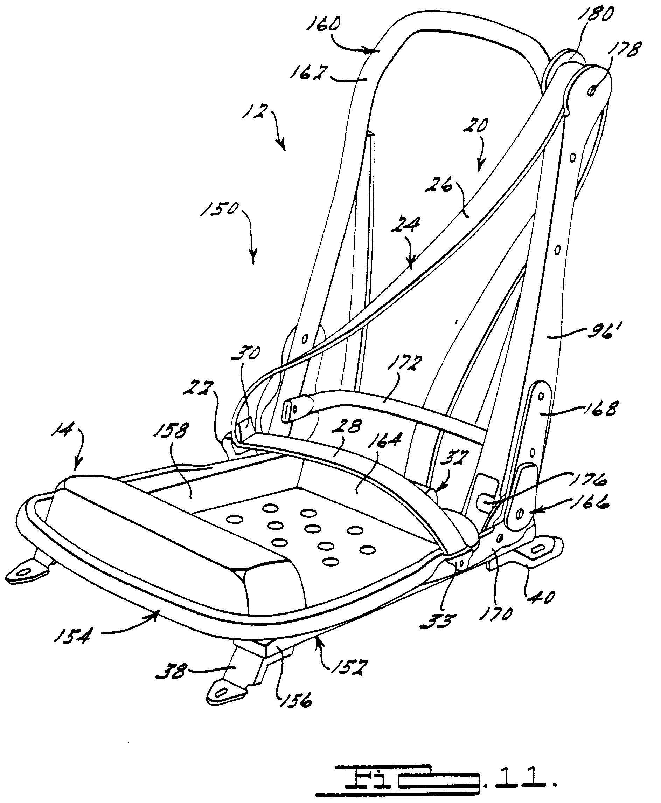

With particular reference to Figures 5, 6, and 7, sectional views are shown through reinforcement beam 96 at various positions along its length. As best seen in Figure 5, a lower end of reinforcement beam 96 is secured to outboard sector arm 46 of recliner mechanism 44 and the flattened over lapping ends 68a and 70a of tubular members 68 and 70 via suitable fasteners, such as recliner bolts 71 for securely tightening reinforcement beam 96 at its lower end to seat back frame 66. Figure 6 illustrates the generally surrounding relationship between reinforcement beam 96 and the outboard edge of seat back frame 66. More particularly, tubular member 68 of seat back frame 66 has its outboard vertical length retained with the open channel of reinforcement beam 96. As best seen from Figure 7, the upper end of reinforcement beam 96 is adapted to support guide mechanism 34 therefrom at a position above the upper extent of seat back 14 so as to be displaced from head rest mechanism 74. Preferably, guide mechanism 34 includes a mounting bracket 102 having a rectangular or square cross-section which is adapted to be inserted over the open top end of reinforcement beam 96. A suitable fastener, such as bolt 104 is used to securely fix mounting bracket 102 to reinforcement beam 96. A brace member 106 is provided for securing the upper end of reinforcement beam 96 and mounting bracket 102 to head rest mechanism 74 for providing additional rigidity to seat assembly 10. Furthermore, an open-channel structure member 100 is provided for enclosing reinforcement beam 96 immediately below mounting bracket 102 to define a rigid "box-like" section.

As will be appreciated, seat back reinforcement beam 96 and cushion reinforcement beams 80 are provided for structurally reinforcing the existing frame components to accommodate loads associated with placement of retractor mechanism 32 at the base of seat back 14. Seat assembly 10 is constructed such that substantially all loading imparted thereon is routed through seat adjustment mechanism 16 to reinforced vehicle structure 18. Furthermore, the reinforced construction of seat assembly 10 cooperates with seat adjustment mechanism 16 to provide sufficient load carrying capacity to inhibit separation (i.e., peeling) of carriages 54 from lower tracks 52. Moreover, loading on the three-point anchorage arrangement of seat assembly 10 is concentrated to a predefined localized area of reinforced vehicle structure 18 and not to various different loading areas. In this manner, seat designers are afforded greater design opportunities to develop a variety of seating systems having no requirement for anchoring a portion of the passenger restraint system to a vertical pillar of the vehicle's frame.

With reference now to Figures 8 through 10, an improved seat assembly 120 is shown which is generally similar to seat assembly 10 with the exception that seat back frame 122 has been modified. More particularly, seat back frame 122 has an inserted tube construction wherein the terminal end portions of a lower tubular member 124 are telescopically inserted into the terminal end portions of upper tubular member 126. As seen in Figure 9, the terminal ends of lower tubular member 124 extend upwardly into upper tubular member 126 such that recliner bolts 71 for sector arms 46 extend therethrough. Such a frame construction provides increased structural reinforcement for augmenting the reinforcement supplied by seat back reinforcement beam 96. It should also be noted that seat frame back frame 122 includes a integral head restraint portion 130 on which a stationary upholstered head rest can be assembled. In addition, an open-channel enclosure member 132 is shown in Figures 8 and 10 for enclosing reinforcement beam 96 along substantially its entire length below guide mechanism 34 to define a rigid "box-like" reinforcement assembly. As will be appreciated, such an arrangement is effective in augmenting the resistance to buckling of reinforcement member 96 during "loaded" conditions.

Figure 11 illustrates another construction for an improved seat assembly having an integrated safety belt restraint system according to the present invention. In general, seat assembly 150 is of the type which has a base portion 152 which does not provide for fore and aft horizontal adjustment, but rather is stationary relative to reinforced vehicle structure 18. However, safety belt restraint system 20 is shown to be integrally incorporated into seat assembly 150 in a manner similar to that previously described.

The particular construction of seat assembly 150 includes a reinforced cushion pan 154 capable of inhibiting buckling under load. Cushion pan 154 is securely mounted to a pair of laterally-spaced tracks 156 which, in turn, are fixed via risers 38 and 40 to vehicle structure 18. In addition, anchor plate 33 and buckle member 22 are shown anchored opposite to one another on laterally-spaced side rails 158 of reinforced cushion pan 154. Seat back frame 160 includes a unitary U-shaped tubular member 162 having its terminal ends positioned in close proximity to a rear cross-rail 164 of cushion pan 154. A pair of sector-type recliner mechanisms 166 interconnect seat back frame 160 for pivotable movement relative to cushion pan 154. Recliner mechanisms 166 each have a sector arm 168 secured to tubular member 162 and a lower bracket 170 secured to at least one of cushion pan 154 and tracks 156. A transverse brace 172 provides additional rigidity and maintains the lateral spacing of the terminal ends of tubular member 162. In addition, retractor mechanism 32 is shown to be fixedly secured to rear cross-rail 164 of cushion pan 154.

In accordance with the present invention, a seat back reinforcement member 96' is provided for increasing the structural rigidity and load carrying capacity of seat back frame 160 while limiting excessive pivotal excursions thereof during "loaded" conditions. Preferably, reinforcement member 96' is an elongated open-channel structural member extending along substantially the vertical outboard extent of seat back frame 160. As such, the outboard vertical portion of tubular member 162 is nested within the open channel of reinforcement member 96'. A recliner shaft 176 is shown to extend completely through a lower end of reinforcement member 96' to promote increased rigidity. In addition, a guide roller 178 is rotatably journalled in a cut-out upper portion 180 of reinforced member 96' so as to be properly positioned above the shoulder of the seat occupant.

As will be appreciated from study of the various seat assemblies, integration of safety belt restraint system 20 can be accomplished in virtually any seating arrangement provided adequate reinforcement is incorporated to meet any structural strength and load-carrying requirements. Accordingly, the foregoing discussion is merely intended to disclose and describe exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. A vehicle seat having a seat bottom frame (56;158), a seat back frame (66; 122; 160), a hinge mechanism for connecting said seat back frame (66; 122; 160) to said seat bottom frame (56; 158), a track mechanism (16; 156) connecting said seat bottom frame (56; 158) to the floor of the vehicle, and a seat belt system (20) comprising a seat belt (24) adapted to be positioned over the lap of the occupant and over the shoulder and across the upper torso of the occupant and anchored at one end to one lateral side of said seat bottom frame (56; 158) or said track mechanism (16; 156), a retractor assembly (32) for anchoring and storing at least a portion of a second end of the seat belt (24), and latch means including a buckle (22) and a latch plate (30) adapted for releasable engagement with said buckle (22) when said seat belt system (20) is deployed and secured about the occupant; characterized in that said seat belt retractor assembly (32) is mounted to one of said seat back frame (66; 122; 160) or said seat bottom frame (56; 158), said seat belt buckle (22) is anchored to the other lateral side of said seat bottom frame (56; 158) or said track mechanism (16; 156), and said seat back frame (66; 122, 160) includes an elongated reinforced member (96;96') extending along a first lateral side thereof that is fixedly connected at its lower end to said hinge mechanism and has mounted at its upper end a guide means (34; 178, 180) for receiving said seat belt (24) to direct said seat belt (24) over the shoulder of the occupant, said elongated reinforced member (96; 96') being of sufficient strength and rigidity to withstand the compressive, torsional, and bending loads exerted thereon as occur under severe loading of said seat belt (24) in an accident condition so that said loads are transferred from said elongated reinforced member (96, 96'), through said hinge mechanism, to said seat bottom frame (56; 158), said track mechanism (16; 156), and the floor of the vehicle.

2. The vehicle seat of Claim 1, characterized by a second reinforced member extending along substantially the entire length of said one lateral side of said seat bottom frame (56; 158).

3. The vehicle of Claim 2, characterized in that the rearward end of said second reinforced member is connected to said hinge mechanism.

4. The vehicle seat of Claim 2 or 3, characterized in that said second reinforced member is connected to said track mechanism (16; 156).

5. The vehicle seat of any of Claims 1 to 4, characterized by brace means (106) for securing said upper end of said elongated reinforcement member (96; 96') to an upper portion of the seat back frame (66; 122; 160).

6. The vehicle of any of Claims 1 to 5, characterized in that said elongated reinforcement member (96; 96') is an open-channel structural member.

7. The vehicle seat of any of Claims 1 to 6, characterized in that said track mechanism (16; 156) includes a pair of laterally spaced lower tracks (52) that are adapted to be secured to the reinforcement floor structure (18) of the vehicle, and a pair of carriages (54) that are slidably mounted on said lower tracks (52) for longitudinal fore and aft movement relative thereto, said seat bottom frame (56; 158) being secured to said carriages (54) for longitudinal movement of said seat relative to the floor structure (18).

8. The vehicle of any of Claims 1 to 7, characterized in that said hinge mechanism comprises a recliner means (44; 166) for connecting the seat back frame (66, 122; 160) for reclining angular movement relative to the seat bottom frame (56; 158).

9. The vehicle seat of Claim 8 characterized in that said recliner means (44; 166) has a first member (46; 168) fixed to said elongated reinforcement member (96; 96') and the seat back frame (66; 122; 160) and a second member fixed to the seat bottom frame (56; 158).

10. The vehicle seat of any of Claims 1 to 9, characterized in that said retractor assembly (32) is operable for inhibiting withdrawal of said safety belt therefrom upon the vehicle being subjected to deceleration levels exceeding a predefined value.
